# EUROPEAN PATENT APPLICATION

(11) **EP 3 438 872 A1**
(43) Date of publication of application: **06.02.2019**
(21) Application number: 17184870.8
(22) Date of filing: 04.08.2017
(51) Int. Cl.: G06K 9/00

(54) **METHOD, APPARATUS AND COMPUTER PROGRAM FOR A VEHICLE**

(71) Applicant: Bayerische Motoren Werke Aktiengesellschaft, 80809 München (DE)
(72) Inventor: Banerjee, Koyel, San Jose, CA 95126 (US); Windelen, Johannes, 76227 Karlsruhe (DE)

(57) **Abstract**

Embodiments relate to a method, an apparatus and a computer program for a vehicle and to a vehicle. The method comprises obtaining (110) camera sensor data of a camera of the vehicle (100). The method further comprises obtaining (120) lidar sensor data of a lidar sensor of the vehicle (100). The method further comprises determining (160) a combined image of the camera sensor data and the lidar sensor data. The method further comprises processing (170) the combined image using an artificial neural network.

## Description

### Field

Examples relate to a method, an apparatus and a computer program for a vehicle and to a vehicle, more specifically, but not exclusively, to determining a combined image of lidar sensor data and camera sensor data.

### Background

Autonomous driving and assisted driving are two major topics of automotive research. A major prerequisite of both may be to sense the surroundings of the vehicle, to enable a recognition of objects and other drivers. One approach may be to sense a distance of objects surrounding the vehicle using a Lidar sensor.

### Summary

There may be a demand to provide an improved concept for detecting objects in a vicinity of a vehicle, which may enable a more precise determination of a location of these objects.

Such a demand may be satisfied by the subject matter of the claims.

Embodiments relate to a method, an apparatus and a computer program for a vehicle and to a vehicle. The method may combine lidar sensor data (of a lidar sensor) and camera sensor data (of a camera) to determine a combined image comprising both distance information (of the lidar sensor data) and color information (of the camera sensor data). This combined image is used as input for an artificial neural network, e.g. for a convolutional neural network, which may perform object detection and/or classification and/or a segmentation of the combined image.

Embodiments provide a method for a vehicle. The method comprises obtaining camera sensor data of a camera of the vehicle. The method further comprises obtaining lidar sensor data of a lidar sensor of the vehicle. The method further comprises determining a combined image of the camera sensor data and the lidar sensor data. The method further comprises processing the combined image using an artificial neural network.

Processing the combined image (instead of either the camera sensor data or the lidar sensor data) using the (same) artificial neural network may increase a precision and/or a validity of the processing, e.g. at external conditions unfavorable for processing only based on the camera sensor data (e.g. at night or in rainy conditions). The neural network may for example perform object recognition and/or identify regions of interest within the combined image.

In various embodiments, the artificial neural network may be configured to detect and/or classify at least one object within the combined image. Alternatively or additionally, the artificial neural network may be configured to segment the combined image. Processing the combined image may improve object detection/classification and/or image segmentation at unfavorable external conditions, for objects further away from the vehicle and/or for partially concealed objects.

In at least some embodiments, the artificial neural network may be a convolutional neural network. Processing the combined image using a convolutional neural network may enable using built-in capabilities of the convolutional neural network related to the processing of image data.

In various embodiments, the artificial neural network may comprise a plurality of inputs. At least one of the plurality of inputs may be based on color information of the combined image and at least one of the plurality of inputs may be based on depth or distance information of the combined image. Using a single artificial neural network to process both the color information and the distance information may enable a improved processing situation the vehicle in, e.g. combining the respective advantages of processing color and distance information.

In at least some embodiments, the method may further comprise upsampling a resolution of depth information within the combined image to match a spatial resolution of color information within the combined image. This may improve a precision of the processing of the combined image, e.g. by processing color and distance information for each pixel (of at least a region) of the combined image.

In various embodiments, the method may further comprise transforming depth or distance information of the combined image into a three-channel image format. The processing of the combined image may be based on the three-channel image format. Using the three-channel image format may enable using convolutional neural networks to process the color information and the distance information of the combined image at once. For example, the three-channel image format is based on one or more elements of the group of horizontal disparity, height above ground and angle with gravity. Alternatively or additionally, the three-channel image format may be based on a three-channel color map providing a linear conversion between depth or distance values and color values.

In at least some embodiments, the determining of the combined image may comprise overlaying depth information of the lidar sensor data onto an image constructed from the camera sensor data. The determining of the combined image may comprise assigning at least one of a distance value, a depth value and an intensity value to pixels of the combined image. This may enable a combined processing of the combined image, e.g. using a (convolutional) neural network.

In various embodiments, the method may further comprise determining information related to one or more edges within the camera sensor data and information related to one or more intensity discontinuities within the lidar sensor data. The determining of the combined image may be based on the information related the one or more edges and based on the information related to the one or more intensity discontinuities. Matching the edges and the intensity discontinuities may enable a mapping of distance/depth/intensity values to pixels of image frames of the camera sensor data.

In at least some embodiments, the method may further comprise determining a calibration of the camera sensor data and of the lidar sensor data based on the information related to the one or more edges and based on the information related to the one or more intensity discontinuities. The determining of the combined image may be based on the calibration of the camera sensor data and of the lidar sensor data. The calibration may match the camera sensor data and the lidar sensor data to the same coordinate system.

In various embodiments, the method may further comprise determining information related to a motion of the vehicle. The determining of the combined image may be further based on the information related to the motion of the vehicle. This may enable accounting for (and/or compensating for) a distance traveled by the vehicle during a rotation of the lidar sensor.

Embodiments further provide a computer program having a program code for performing the method, when the computer program is executed on a computer, a processor, or a programmable hardware component.

Embodiments further provide an apparatus for a vehicle. The apparatus comprises at least one interface configured to communicate with a camera of the vehicle and to communicate with a lidar sensor of the vehicle. The apparatus further comprises a processing module configured to obtain camera sensor data of the camera. The processing module is further configured to obtain lidar sensor data of the lidar sensor. The processing module is further configured to determine a combined image of the camera sensor data and the lidar sensor data. The processing module is further configured to process the combined image using an artificial neural network.

Embodiments further provide a vehicle comprising such an apparatus.

### Brief description of the Figures

Some examples of apparatuses and/or methods will be described in the following by way of example only, and with reference to the accompanying figures, in which
- Fig. 1a: shows a flow chart of a method for a vehicle;
- Fig. 1b: shows a block diagram of an apparatus for a vehicle;
- Fig. 1c: shows another flow chart of a method for a vehicle;
- Figs. 2a: and 2b show flow charts of methods for processing of lidar and camera data;
- Fig. 3a: shows a flow chart of a method for processing camera sensor data and lidar sensor data;
- Figs. 4a: to 4c show diagrams of a training loss for different inputs to an artificial neural network;
- Figs. 5a to 5c: show diagrams of a mean average precision of different implementations of convolutional neural networks; and
- Figs. 6a to 6c: show schematic drawings of an evaluation of detected and labeled objects within a street scene.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

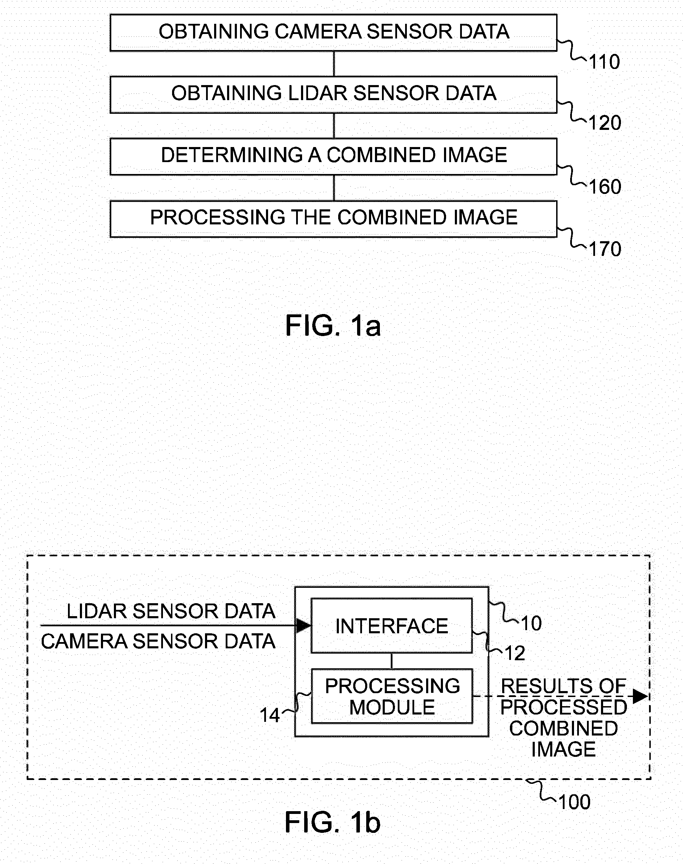

Fig. 1a illustrates a flow chart of a method for a vehicle 100. Fig. 1b illustrates a block diagram of a corresponding apparatus for the vehicle 100. The apparatus 10 comprises at least one interface 12 configured to communicate with a camera of the vehicle 100 and to communicate with a lidar sensor of the vehicle 100. The apparatus 10 further comprises a processing module 14 configured to execute the method of Fig. 1a, e.g. the method steps 110 to 170. The at least one interface 12 is coupled to the processing module 14. In various embodiments, the apparatus 10 further comprises the lidar sensor and/or the camera. Fig. 1b further illustrates a block diagram of the vehicle 100 comprising the apparatus 10. In at least some embodiments, the vehicle 100 may be one of an automobile, a motorbike, an autonomous vehicle, a semi-autonomous vehicle, a vessel, a train, a truck, a lorry or a van.

The method (of Fig. 1a) comprises obtaining 110 camera sensor data of a camera of the vehicle 100. The method further comprises obtaining 120 lidar sensor data of a lidar sensor of the vehicle 100.

In various embodiments, the camera may be one of a video camera, a high-speed camera or a still image camera. The camera sensor data may be a raw output of the camera. Alternatively, the camera sensor data may be pre-processed sensor data of the camera. For example, the camera sensor data may comprise a plurality of image frames. An image frame of the plurality of image frames may comprise a plurality of pixels, e.g. a plurality of pixels in a two-dimensional arrangement. For example, a frame rate of the camera sensor data and/or a triggering of frames within the camera sensor data may be matched to a rotation speed and/or a rotation angle of the lidar sensor. For example, the camera may comprise a camera sensor (e.g. a CMOS (Complementary Metal-Oxide-Semiconductor) sensor or a CCD (Charge-Coupled Device) and a camera lens. The camera may be configured to provide the camera sensor data to the apparatus 10. For example, the camera sensor data may comprise raw camera sensor data (e.g. a raw output of the sensor) or pre-processed camera sensor data (e.g. image information). In some embodiments, the camera sensor data may comprise a stream of image frames (e.g. in a moving picture file format). Alternatively, the camera sensor data may comprise separate images (image frames). The camera sensor data may comprise image information, e.g. color information for each pixel of the image information.

Lidar is either a portmanteau of Light and Radar (Radio Detection and Ranging), or an acronym of Light Detection and Ranging or Light Imaging, Detection and Ranging. In at least some embodiments, the lidar sensor may be configured to determine the lidar sensor data based on emitting light (e.g. pulsed laser light) and measuring a portion of the light reflected from objects in a vicinity of the lidar sensor. The lidar sensor data may comprise distance information. In at least some cases, the terms depth (or depth information, depth value) and distance (or distance information, distance value) may be used interchangeably. For example, the lidar sensor data may comprise a point cloud of distance information. For example, the distance information may comprise information related to a distance of a plurality of points (e.g. of the point cloud) from the lidar sensor (distance values), information related to a depth of a space in a vicinity of the lidar sensor demarcated by objects surrounding the lidar sensor (depth values), and/or information related to an intensity of a portion of light emitted by the lidar sensor, reflected by objects in a vicinity of the lidar sensor and measured by the lidar sensor (intensity values). For example, the intensity values may indicate a distance and/or a coloring of objects reflecting the portion of the emitted light. The point cloud may comprise distance information for different vertical and/or horizontal angles around a rotation axis of the lidar sensor. For example, the lidar sensor may be configured to rotate at a pre-defined of adjustable rotation frequency. The lidar sensor data may comprise a point cloud of distance information for each rotation or for a subset of rotations of the lidar sensor. For example, a spatial resolution of the lidar sensor data may be lower than a spatial resolution of the camera sensor data.

The method further comprises determining 160 a combined image of the camera sensor data and the lidar sensor data. The method further comprises processing 170 the combined image using an artificial neural network. The neural network may for example perform object recognition and/or identify regions of interest within the combined image. For example, the artificial neural network may be a pre-trained neural network. Alternatively, the artificial neural network may be at least partially trained based on the lidar sensor and/or based on the camera (e.g. based on the lidar sensor model and/or based on the camera sensor model). The artificial neural network may be configured to detect and/or classify at least one object within the combined image. For example, the artificial neural network may be configured to determine a bounding box for at least one classified object within the combined image. For example, the artificial neural network may be configured to detect one or more classes of objects within the combined image. The artificial neural network may be configured to detect at least one element of the group of other vehicles, pedestrians and traffic signs within the combined image. Alternatively or additionally, the artificial neural network may be configured to segment the combined image. For example, the artificial neural network may be configured to identify regions of interest within the combined image. The method may further comprise processing the regions of interest, e.g. using the artificial neural network, using another artificial neural network and/or using a processor. In various embodiments, the artificial neural network and/or the other artificial neural network may be implemented using a dedicated circuit, e.g. an application specific integrated circuit for implementing the artificial neural network. Alternatively, the artificial neural network may be implemented in software, e.g. executed by a processor of the processing module.

In at least some embodiments, the artificial neural network is a convolutional neural network. Convolutional neural networks may offer a number of advantages in the processing of image data. For example, the combined image may comprise the distance information in an image format for as input for the convolutional neural network. The artificial neural network may comprise a plurality of inputs. At least one of the plurality of inputs may be based on color information of the combined image. At least one of the plurality of inputs may be based on distance information (e.g. distance values, depth values or intensity values) of the combined image. For example, three inputs of the plurality of inputs may be based on the color information of the combined image (e.g. red, green and blue channels). Three inputs of the plurality of inputs may be based on the distance information of the combined image (e.g. converted into a three-channel image format. Processing both color information and depth, distance or intensity information of the combined image within the artificial neural network may improve a recognition or classification of objects and a segmentation of the combined image.

In various embodiments, the method may further comprise transforming distance information (e.g. depth/distance/intensity values) of the combined image into a three-channel image format. The processing 170 of the combined image may be based on the three-channel image format. For example, the three-channel image format may be based on a three-channel color map providing a linear conversion between distance values (or depth values, intensity values) and color values, e.g. a JET coloring or a coloring similar to JET coloring. The three-channel image format may be based on one or more elements of the group of horizontal disparity, height above ground and angle with gravity (HHA). The three-channel image format may be analyzed using pre-trained convolutional neural networks. For example, the three-channel image format may comprise two or more representations of the distance information. The combined image may comprise two or more representations of the distance information. For example, the two or more representations may comprise a projection of distance values/depth values/intensity values of the distance information onto a linear color scale, e.g. from blue over green, yellow and orange to red (as in JET coloring). Additionally or alternatively, the two or more representations may comprise a color representation of at least one element of the group of horizontal disparity, height above ground and angle with gravity (HHA).

Within the data fusion, depth information (e.g. the distance information) may be encoded in a way the detection network (e.g. the artificial neural network can understand it), e.g. using JET coloring or HHA features. For example, a first higher distance value may be encoded with a different color value (e.g. of the three-channel image format) into the combined image than a second lower distance value. E.g., in JET coloring, the first higher distance value (further away from the vehicle) may be encoded as a blue value in the three-channel image format, and the second lower distance value (closer to the vehicle) may be encoded as a red value, with the values in between ranging from blue over green, yellow and orange to red.

For example, the determining 160 of the combined image may comprise determining a mapping between distance information within the lidar sensor data and color information (e.g. image information or pixel information) within the camera sensor data. For example, the determining 160 of the combined image may comprise determining distance information for each pixel of the color information within the camera sensor data or for each pixel of a cropped portion of the color information within the camera sensor data. The determining 160 of the combined image may comprise assigning a distance value, a depth value or an intensity value to pixels/points of the combined image, e.g. to each pixel/point of the combined image. This may enable the determination of the combined image. For example, the lidar sensor data may comprise a point cloud of distance information. The determining 160 of the combined image may comprise projecting points of the point cloud onto a camera plane of the camera sensor data. For example, the projecting of the point cloud onto the camera plane may comprise translating the points of the point cloud into a coordinate system of the camera sensor data or into a common coordinate system used for the combined image. The projection may enable a mapping of distance (or depth, intensity) values to pixels of image frames of the camera sensor data. For example, a distance value/depth/intensity value of a pixel/point of the combined image may indicate or approximate a distance of said pixel/point from the vehicle 100 (e.g. from the lidar sensor). The combined image may comprise distance information (e.g. the distance value/depth/intensity value for the points/pixels of the combined image) and color information (e.g. three-channel color information for the pixels/points of the combined image). This may enable a combined processing of the combined image, e.g. using a (convolutional) neural network. The determining 160 of the combined image may comprise overlaying distance information of the lidar sensor data onto an image constructed from the camera sensor data.

In at least some embodiments, the combined image may be based on a common coordinate system, which may be different from a coordinate system of the color information (or pixel information/image information) and different from a coordinate system of the depth information. Alternatively, the common coordinate system may be the coordinate system of the color information (e.g. a camera coordinate system of the camera). The common coordinate system may be a two-dimensional coordinate system specifying a plurality of points arranged in a two-dimensional formation. For example, the determining 160 of the combined image may comprise determining distance information for each point of the plurality of points specified by the common coordinate system. For example, the determining 160 of the combined image may comprise mapping the camera sensor data (e.g. the color information within the camera sensor data) to the common coordinate system (e.g. to the plurality of points specified by the common coordinate system).

In at least some embodiments, the method may further comprise upsampling a resolution of distance information (e.g. distance values, depth values, intensity values) within the combined image to match a spatial resolution of color information within the combined image. The upsampling may improve a processing by the neural network. For example, the upsampling may comprise determining a distance value (or depth value, intensity value) for each pixel of the color information within the combined image. For example, the upsampling may comprise determining a distance value (depth value, intensity value) for each point within the common coordinate system (or for each point within a region of the common coordinate system, e.g. for each point within a region of the common coordinate system, for which both camera sensor data and lidar sensor data is available). For example, the upsampling may be based on a bilateral filtering of the lidar sensor data. For example, once the calibration parameters between the camera and Lidar co-ordinates are determined and before the projection onto a hybrid RGBD data (e.g. the determining 160 of the combined image) takes place from both domains with depth + camera values, the Lidar images may be upsampled using an (innovative) bilateral filtering, which other systems might not use within a process pipeline of fusion of data from multiple sensors.

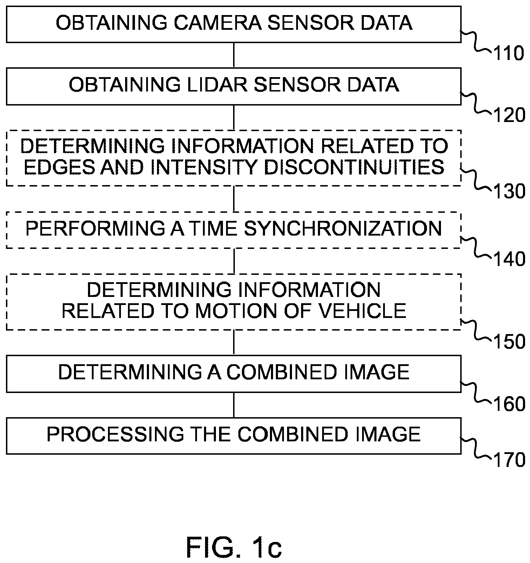

In various examples, as shown in Fig. 1c, the method may further comprise determining 130 information related to one or more edges within the camera sensor data and information related to one or more intensity discontinuities (or one or more depth discontinuities/distance discontinuities) within the lidar sensor data. For example, the determining 130 of the information related to the one or more edges may comprise detecting one or more brightness discontinuities and/or one or more color discontinuities within the camera sensor data. For example, the determining of the information related to the one or more edges may comprise comparing color values and/or brightness values of adjacent pixels within the camera sensor data to identify the one or more edges. The determining of the information related to the one or more intensity discontinuities may comprise comparing intensity values and/or depth values of adjacent points within the point cloud of the lidar sensor data to identify the one or more intensity discontinuities (or depth continuities). The one or more edges may align with the one or more brightness discontinuities and/or the one or more color discontinuities within the combined image. The determining 160 of the combined image may be based on the information related the one or more edges and based on the information related to the one or more intensity discontinuities. Matching the edges and the intensity discontinuities may enable a mapping of distance/depth/intensity values to pixels of image frames of the camera sensor data. For example, the determining 160 of the combined image may comprise reducing a mismatch of an overlay of the one or more edges within the camera sensor data and the one or more intensity discontinuities within the lidar sensor data, e.g. data over a plurality of frames within the camera sensor data and over a plurality of point clouds within the lidar sensor data. For example, the reducing of the mismatch may comprise transforming (e.g. shifting, rotating, translating and/or scaling) the lidar sensor data and/or the camera sensor data to improve an alignment of the one or more edges with the one or more intensity discontinuities. The reducing of the mismatch may comprise determining translation and rotation parameters to reduce the mismatch between the one or more edges within the camera sensor data and the one or more intensity discontinuities within the lidar sensor data. For example, the determining of the translation and rotation parameters may be based on an initial guess (e.g. based on a previously reduced mismatch between the one or more edges and the one or more intensity discontinuities) and a subsequent adjustment of the translation and rotation parameters. For example, the translation and rotation parameters may be gradually adjusted from the initial guess as long as the mismatch decreases. The calibration may match or project the camera sensor data and the lidar sensor data to a common coordinate system.

In various examples, the method may further comprise transforming a point cloud of the lidar sensor data based on the information related the one or more edges and based on the information related to the one or more intensity discontinuities. For example, the transforming of the point cloud may (substantially) align the one or more intensity discontinuities with the one or more edges within the common coordinate system. For example, the transforming of the point cloud may project the point cloud to the common coordinate system so that the one or more intensity discontinuities are substantially aligned with the one or more edges. The determining 160 of the combined image may be based on the transformed point cloud. Transforming the point cloud (e.g. scaling, shifting or translating the point cloud) may enable a mapping of distance/depth/intensity values to pixels of image frames of the camera sensor data.

In at least some examples, the determining 130 of the information related to the one or more edges within the camera sensor data and the information related to the one or more intensity discontinuities within the lidar sensor data may be based on a plurality of frames of the camera sensor data and based on a plurality of point clouds of the lidar sensor data. For example, the plurality of frames of the camera sensor data and the plurality of point clouds may be based on a changing scenery, e.g. while the vehicle is in motion. For example, the determining 130 of the information related the one or more edges and of the information related to the one or more intensity discontinuities may be performed while the vehicle is in motion, e.g. while the vehicle in motion and/or based on a changing scenery. This may enable a constant re-adjustment of the (extrinsic) calibration, and might render a factory-based extrinsic calibration obsolete. For example, the plurality of frames of the camera sensor data and the plurality of point clouds might not be based on a static scenery, e.g. might not be based on a calibration checkerboard. In various embodiments, the camera sensor data may comprise a plurality of frames. The determining 130 of the information related the one or more edges may comprise detecting the one or more edges over the plurality of frames. For example, the determining 130 of the information related to the one or more edges may increase a precision of the detection of the one or more edges of the plurality of frames. The determining 130 of the information related to the one or more edge may comprise tracking the one or more edges over the plurality of frames. The lidar sensor data may comprise a plurality of point clouds of the lidar sensor data. The determining 130 of the information related to the one or more intensity discontinuities may comprise detecting the one or more discontinuities over the plurality of point clouds. The determining 130 of the information related to the one or more edge may comprise tracking the one or more intensity discontinuities of the plurality of point clouds. This may enable a more precise alignment e.g. while the vehicle is in motion. The plurality of frames of the camera sensor data and the plurality of point clouds may be obtained from the camera and from the lidar sensor during a pre-defined timeframe. For example, the determining 130 of the information related to the one or more edges may be performed after the plurality of frames of the camera sensor data and the plurality of point clouds are recorded by the lidar sensor and by the camera. For example, the plurality of frames may comprise at least 5 (or at least 10, or at least 20, or at least 30) frames. The plurality of point clouds may comprise at least 5 (or at least 10, at least 20, at least 30) point clouds. For example, the determining 130 of the information related to the one or more edges within the camera sensor data and the information related to the one or more intensity discontinuities within the lidar sensor data may be performed while the vehicle is in motion. For example, the determining 160 of the combined image may comprise (gradually) reducing a mismatch of an overlay of the one or more edges over the plurality of (image) frames of the camera sensor data and the one or more intensity discontinuities of the plurality of point clouds within the lidar sensor data. Alternatively, the determining 130 of the information related to the one or more edges within the camera sensor data and the information related to the one or more intensity discontinuities within the lidar sensor data may be performed while the vehicle is standing (static).

In at least some embodiments, the method further comprises determining a calibration of the camera sensor data and of the lidar sensor data based on the information related to the one or more edges and based on the information related to the one or more intensity discontinuities. For example, the calibration may be an extrinsic calibration of the camera sensor data and of the lidar sensor data. The calibration may indicate at least one transformation parameter (e.g. first and second transformation parameters) for a projection or transformation of the lidar sensor data and/or of the camera sensor data onto the common coordinate system. The calibration may indicate at least one transformation parameter (e.g. first and second transformation parameters) for overlaying the lidar sensor data and the camera sensor data such that outlines of an object comprised within the lidar sensor data substantially match outlines of the object comprised within the camera sensor data. The determining 160 of the combined image may be based on the calibration of the camera sensor data and of the lidar sensor data. For example, the determining of the calibration may be based on reducing a mismatch of an overlay of the one or more edges within the camera sensor data and the one or more intensity discontinuities within the lidar sensor data, e.g. over a plurality of frames within the camera sensor data and a plurality of point clouds within the lidar sensor data. For example, the reducing of the mismatch may comprise determining translation and rotation parameters to reduce the mismatch between the one or more edges within the camera sensor data and the one or more intensity discontinuities within the lidar sensor data. The calibration may match the camera sensor data and the lidar sensor data to the common coordinate system.

In various embodiments, the determining of the calibration comprises determining first transformation parameters for transforming the camera sensor data from a camera coordinate system to the common coordinate system. The determining of the calibration may comprise determining second transformation parameters for transforming the lidar sensor data from a lidar coordinate system to the common coordinate system. For example, the first transformation parameters and/or the second transformation parameters may comprise at least one element of the group of cropping parameters, scaling parameters, shifting parameters and rotational parameters. The combined image may be based on the common coordinate system. For example, the determining 160 of the combined image may comprise transforming or projecting the camera sensor data to the common coordinate system based on the first transformation parameters. The determining 160 of the combined image may comprise transforming or projecting the lidar sensor data (e.g. one or more point clouds within the lidar sensor data) to the common coordinate system based on the second transformation parameters. The common coordinate system may enable a combined processing of the combined image, e.g. using a (convolutional) neural network.

In various embodiments, the determining of the calibration may be performed or triggered according to a pre-defined time-interval (e.g. every hour, every predetermined amount of hours, every day, every week), based on a power cycle of the vehicle 100 (e.g. every time the vehicle 100 is started) and/or based on a motion of the vehicle 100. As a calibration mismatch may occur, such events may trigger the calibration. For example, the determining of the calibration may be triggered, if the motion of the vehicle violates a motion threshold, e.g. if the vehicle encounters a road bump or road conditions that are detrimental to a precision of the calibration.

In various embodiments, the method further comprises performing 140 a time synchronization between the camera sensor data and the lidar sensor data. For example, the performing 140 of the time synchronization may comprise synchronizing an image capturing by the camera for the camera sensor data and a measuring of point clouds by the lidar sensor for the lidar sensor data. Alternatively or additionally, the performing 140 of the time synchronization may comprise determining a time offset between the lidar sensor data and the camera sensor data. For example, the performing of the time synchronization may bring a capture time of images captured by the camera for the camera sensor data into a pre-determined temporal relationship with a capture time of point clouds captured by the lidar sensor for the lidar sensor data. For example, the determining 160 of the combined image may be further based on the time synchronization between the camera sensor data and the lidar sensor data. The time synchronization may enable a better alignment of the camera sensor data and the lidar sensor data. For example, the method may further comprise triggering the camera to capture an image (frame) for the camera sensor data based on the time synchronization. For example, the method may further comprise triggering the lidar sensor to capture a point cloud for the lidar sensor data based on the time synchronization.

In at least some embodiments, the performing 140 of the time synchronization is triggered based on the lidar sensor. For example, the time synchronization may be based on a rotation of the lidar sensor, e.g. based on a frequency of the rotation, based on a time of the rotation and/or based on a rotation angle. For example, when the lidar sensor completes or commences a recording of a point cloud of one rotation of the lidar sensor, the camera sensor may be triggered. Alternatively, the camera sensor may be triggered based on a current rotation angle of the lidar sensor. The time synchronization may be based on a rotation angle of the lidar sensor. For example, a hardware sensor (e.g. an induction sensor (to sense a magnetic marking of the lidar sensor) or an optical sensor) may be configured to detect a pre-determined angle of the rotation of the lidar sensor (e.g. an encoder position) and to trigger the camera sensor based on the detected pre-determined angle. Alternatively, the rotation angle may be determined based on a rotation frequency and based on a pre-determined start time of the rotation of the lidar sensor. The rotation angle may be determined based on a time offset since the pre-determined start time of the rotation and based on the rotation frequency. Using the lidar sensor, e.g. a rotation angle of the lidar sensor, as reference may enable a more precise alignment of the camera sensor data and the lidar sensor data as the triggering of an image capture using the camera sensor may more readily adjustable.

In at least some embodiments, the method may further comprise determining 150 information related to a motion of the vehicle 100. For example, the information related to the motion of the vehicle may comprise information related to a movement of the vehicle, e.g. related to at least one of a velocity of the vehicle, a steering angle of the vehicle, a movement of the vehicle along the road and a movement of the vehicle orthogonal to a direction of the road. The determining 160 of the combined image may be further based on the information related to the motion of the vehicle. This may enable accounting for a distance traveled by the vehicle during a rotation of the lidar sensor. For example, the determining 160 of the combined image may comprise compensating the motion of the vehicle for the combined image, e.g. based on the time synchronization between the camera sensor data and the lidar sensor data. For example, the method may further comprise compensating for the motion of the vehicle in the determination of the combined image. The resulting combined image may have a better alignment between the lidar sensor data and the camera sensor data. For example, the method may comprise transforming a point cloud within the lidar sensor data based on the information related to the motion, e.g. and based on a pre-determined time-offset between the lidar sensor data and the camera sensor data (as indicated by the time synchronization). The determining 160 of the combined image may be based on the transformed point cloud. The compensating for the motion may transform the point cloud such that the transformed point cloud indicates an estimated distance of objects in a vicinity of the vehicle at a specific point of time (as opposed to the period of time required by a rotation of a rotational lidar sensor), e.g. as if the lidar sensor had recorded the point cloud all at once at the specific point of time. The transforming of the point cloud may transpose at least a part of the point cloud to an estimated position of the part of the point cloud at a time a corresponding camera image of the camera sensor data is taken based on the information related to the motion, e.g. based on a pre-determined time-offset between the lidar sensor data and the camera sensor data (as indicated by the time synchronization). Transforming the point cloud may enable the determination of the distance/depth/intensity values of the point cloud at the point in time the camera sensor data was taken by the camera sensor.

The at least one interface 12 may correspond to one or more inputs and/or outputs for receiving and/or transmitting information, which may be in digital (bit) values according to a specified code, within a module, between modules or between modules of different entities. In embodiments the processing module 14 may be implemented using one or more processing units, one or more processing devices, any means for processing, such as a processor, a computer or a programmable hardware component being operable with accordingly adapted software. In other words, the described function of the processing module 14 may as well be implemented in software, which is then executed on one or more programmable hardware components. Such hardware components may comprise a general purpose processor, a Digital Signal Processor (DSP), a micro-controller, etc.

In some object detection systems, detections/classifications and localizations may be largely done (only) with camera images (mono or stereo). Recent research that incorporates depth in these kind of algorithms may achieve a 37.2 % average precision on the NYUD (New York University Depth) dataset (of static indoor scenes). Some systems may use depth (only) for the purpose of classification and detections on outdoor scenes; however, results may have been unpromising and no further research may have been pursued on this topic hence. Usually point clouds obtained from LiDARs (e.g. as lidar sensor data) may be (very) sparse in nature, which may make it difficult to understand and align features as could be done with a camera image. This kind of point cloud density maybe effective to some extend for lustering, but may show significant error for classification and even more for detections. Outdoor scenes, where dynamic objects are involved, may fare worse than a controlled indoor environment, for which a point cloud can be obtained. Also, other systems might not train networks on both RGB and Depth at the same time and end to end.

At least some embodiments are based on adding a different data layer (e.g. to the combined image) for any/all existing networks (artificial neural networks), which may take in multiple representations of depth (e.g. the distance information) combined with RGB (Red, Green and Blue color information) such that the learning of features can be transferred from one to another mostly because the depth is encoded in a structure similar to the RGB images. This research may be extended to multi-dimensional inputs without any change to the low lying architecture and also may be extended to multimodal sensors.

At least some embodiments may enable an improved detection of far-away objects and occluded objects. At least some embodiments may be used for active pedestrian and vehicle detections in urban scenarios. Having depth as an input to these kind of networks may result in a (much) more precise segmentation for target objects like road/road-signs and occluded objects.

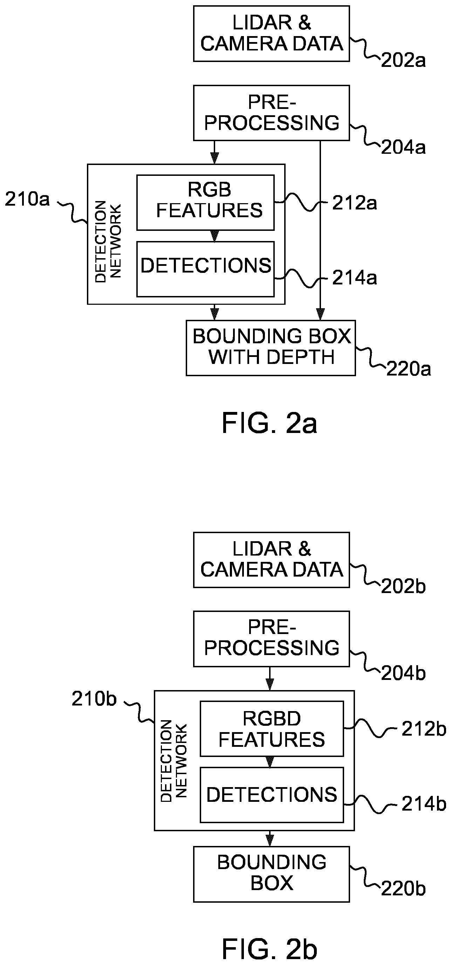

Figs. 2a and 2b show flow charts of methods for processing of lidar and camera data 202a; 202b (e.g. of the lidar sensor data and the camera sensor data). For example, in a naive implementation of Fig. 2a, the lidar and camera data may be pre-processed 204a, and a detection network 210a may process the RGB features 212a of the camera data to detect 214a objects within the camera data and then provide bounding boxes with depth information 220a based on the processed camera data and the lidar data (which might not have been processed by the detection network 210a).

Fig. 2b shows a flow chart of a method for a processing of lidar and camera data 202b using early fusion and detection. The lidar and camera data may be pre-processed 204b, e.g. to obtain the combined image. The detection network 210b may be configured to processed the RGBD (Red, Green, Blue, Depth) features 212b (e.g. the combined image, the lidar data and the camera data) to detect 214b objects within the camera data and lidar data and then provide bounding boxes 220b. For example, the method of Fig. 2b may be implemented similar to the method introduced in connection with Figs. 1a and/or 1c.

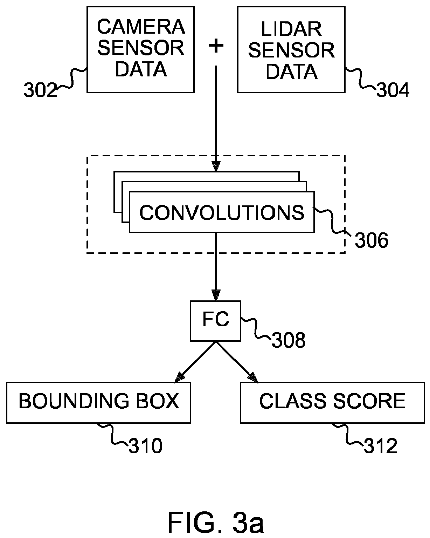

Fig. 3a shows a flow chart of a method for processing camera sensor data 302 and lidar sensor data 304, e.g. of a photo of a plurality of objects and of a corresponding lidar measurement of said plurality of objects, e.g. represented using JET coloring of distance, depth or intensity values. The method of Fig. 3b may make use of (early) sensor fusion. For example, the method of Fig. 3b may be implemented similar to the method introduced in connection with Figs. 1a and/or 1c. The camera sensor data 302 and the lidar sensor data 304 may be (jointly) input into a convolutional neural network 306. The convolutional neural network may for example have a Faster-RCNN (Regions with Convolutional Neural Network) as base architecture. At a low level, the convolutional neural network 306 may comprise 1 deep convolutional network, with 6 input channels and fusion at the raw data level (e.g. within the combine image). At the output of the convolutional neural network 306, a fully connected (FC) layer 306 may output bounding boxes 310 and class scores 312.

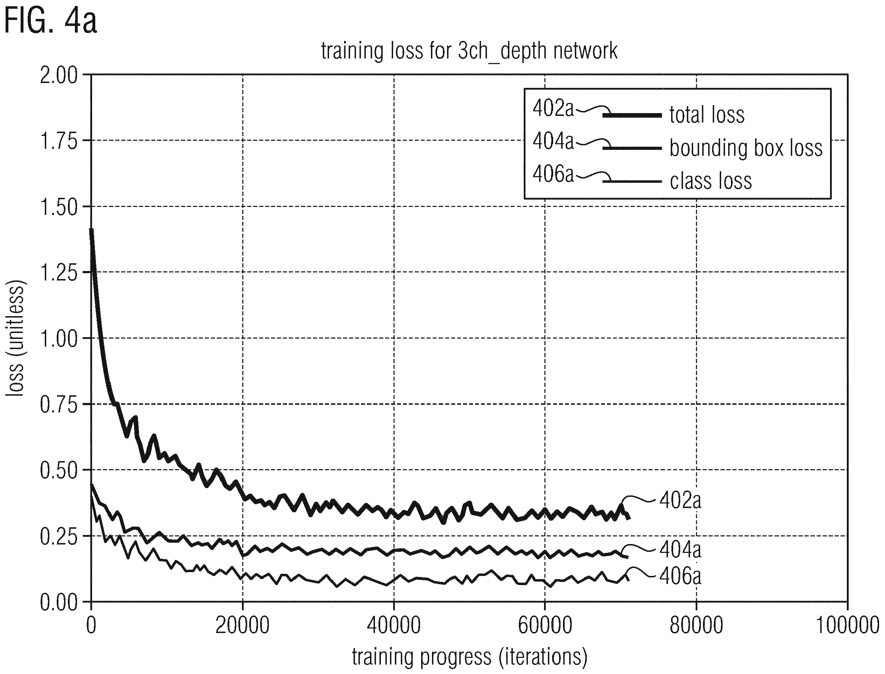

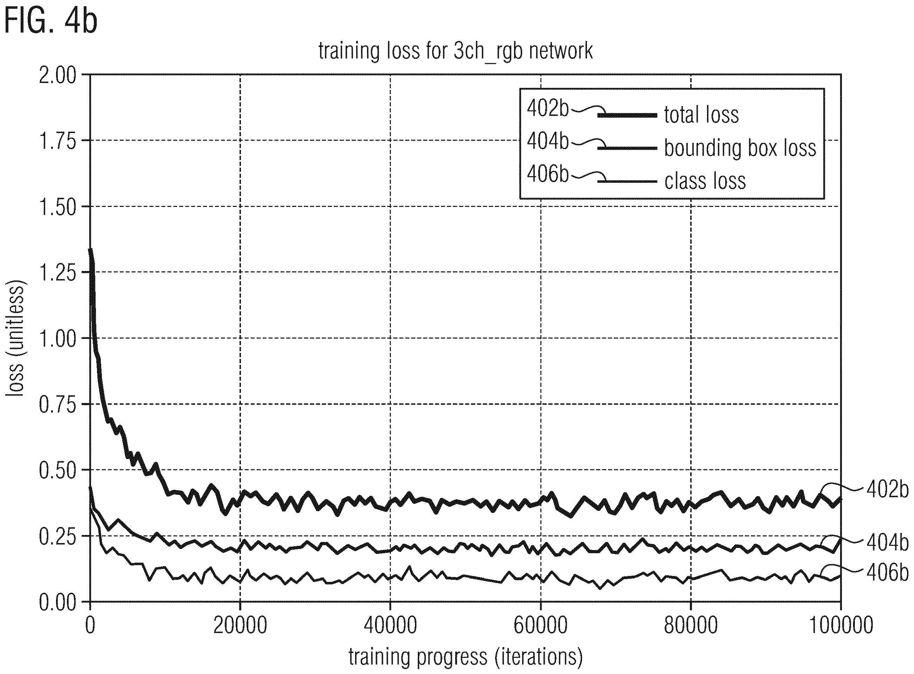

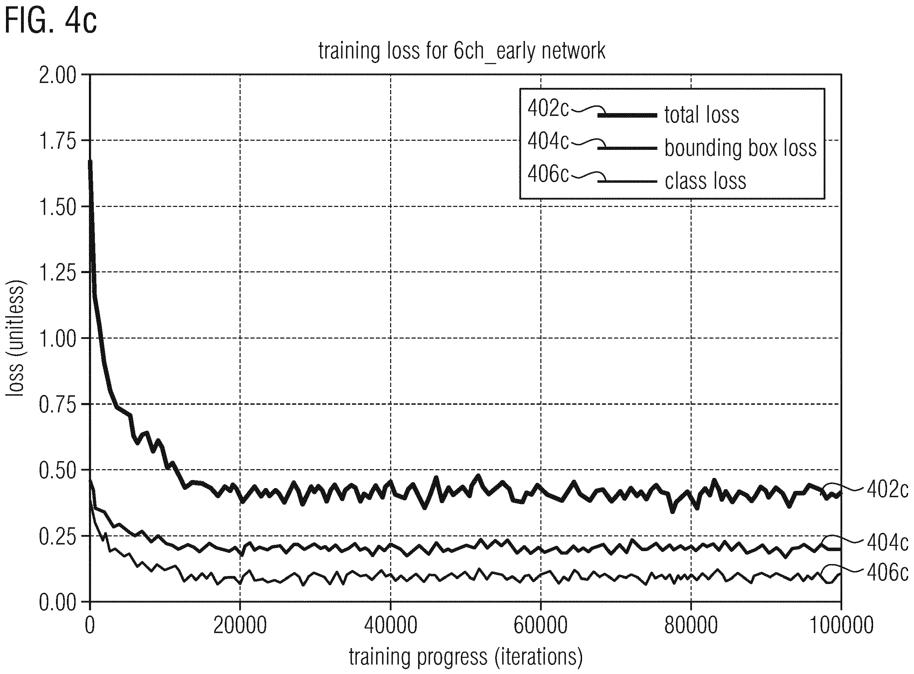

Figs. 4a to 4c show diagrams of a training loss for different inputs to an artificial neural network. Fig. 4a shows a training loss for a three-channel depth input, Fig. 4b shows a training loss for a three-channel RGB input, and Fig. 4c shows a training loss for a six channel input comprising RGB data (e.g. the color information) and depth data (e.g. the distance information). Training graphs 402a/b/c show the total loss, training graphs 404a/b/c show the bounding box loss and training graphs 406a/b/b show the class loss. As illustrated by Figs. 4a-4c, all three architectures learn, with the architectures comprising a six channel input or a three channel RGB input having a similar loss, arriving at their base line of approximately 0.35 total loss, 0.22 bounding box loss and 0.12 class loss after approximately 100000 training iterations. The architecture comprising the three-channel depth input arrives at the base line of approximately 0.35 total loss, 0.22 bounding box loss and 0.12 class loss after approximately 100000 training iterations.

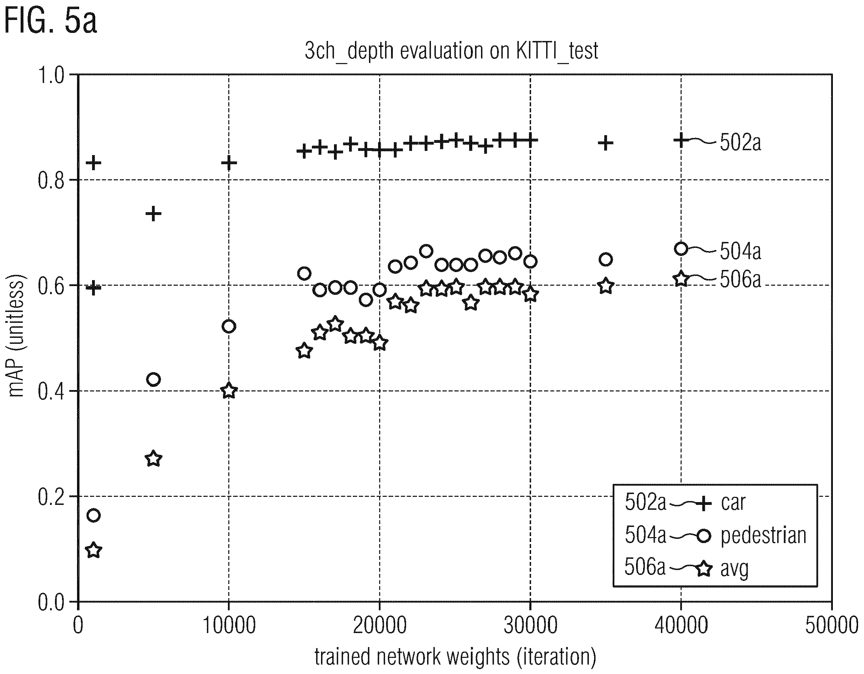

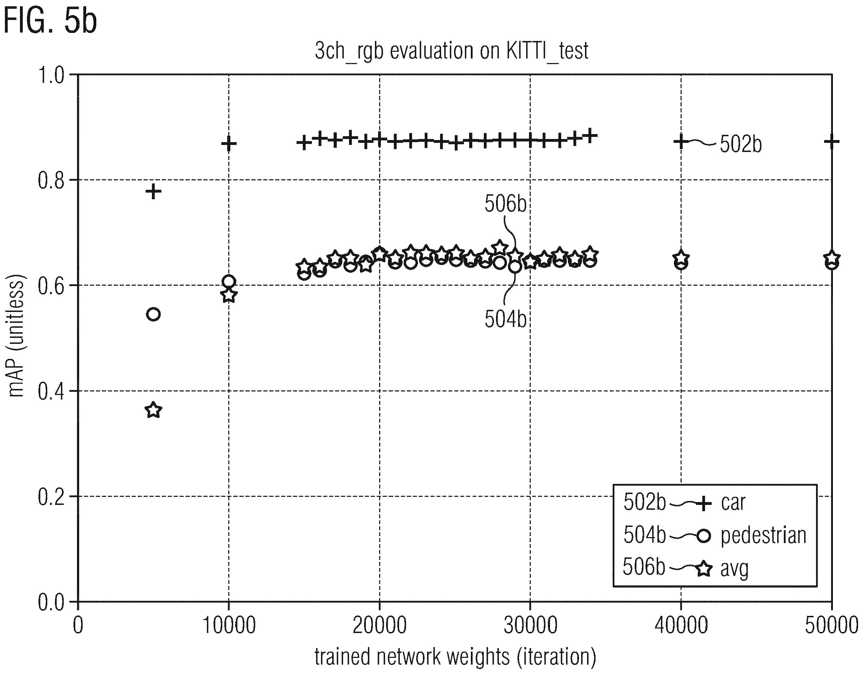

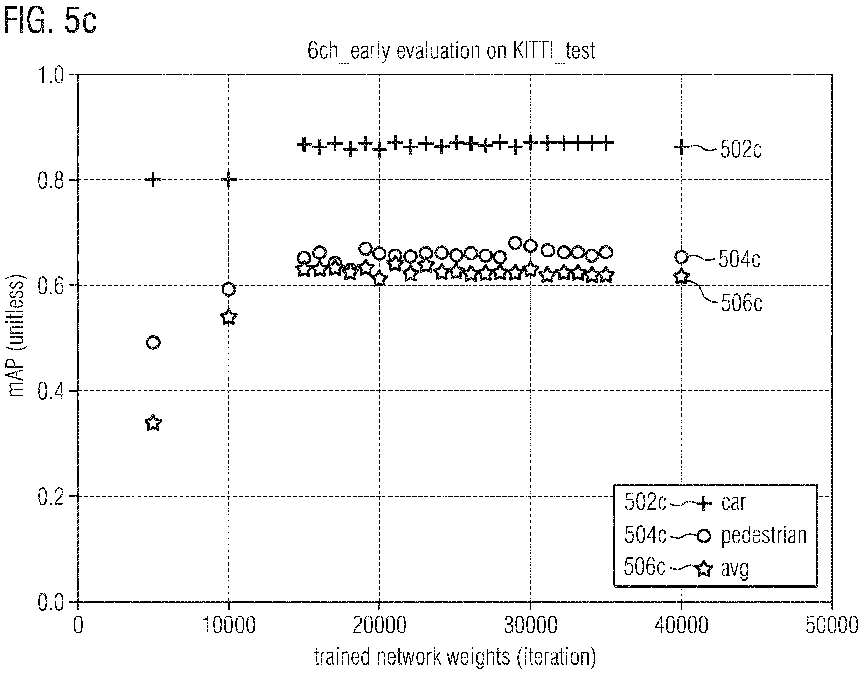

Figs. 5a to 5c show diagrams of a mean average precision of different implementations of convolutional neural networks. Fig. 5a shows a mean average precision (mAP) of a detection/classification of a car 502a, of a pedestrian 504a, and an average value 506a for a convolutional neural network having a three-channel depth input. Fig. 5b shows a mean average precision of a detection/classification of a car 502b, of a pedestrian 504b, and an average value 506b for a convolutional neural network having a three-channel RGB input. Fig. 5c shows a mean average precision of a detection/classification of a car 502c, of a pedestrian 504c, and an average value 506c for a convolutional neural network having a six-channel RGB-depth input based on early fusion. As illustrated by Figs. 5a-4c, all three architectures generalize. The architectures comprising a six channel input (Fig. 5c) or a three channel RGB input (Fig. 5b) have a similar mean average precision of approximately 0.87 for the car 502b; 502c and approximately 0.65 for the pedestrian 504b; 504c and slightly higher average values 506b for the three-channel RGB input and slightly lower average values 506c for the six-channel input. In Figs 5a- 5c, the levels of the mean average are shown for 100000 trained data points, evaluated on 40000^{th} iteration training weights (for all categories). Figs. 5a to 5c show after extensive training on 100,000 iterations how the results generalize over a test data set. The trained weights from the 40,000th iteration of the training were used to run the tests. Results would have been similar for other iteration weights, e.g. for the 40001th iteration. The architecture comprising a three-channel depth input (Fig. 5a) converges on similar values, with the average value 506a being lower at approximately 0.6.

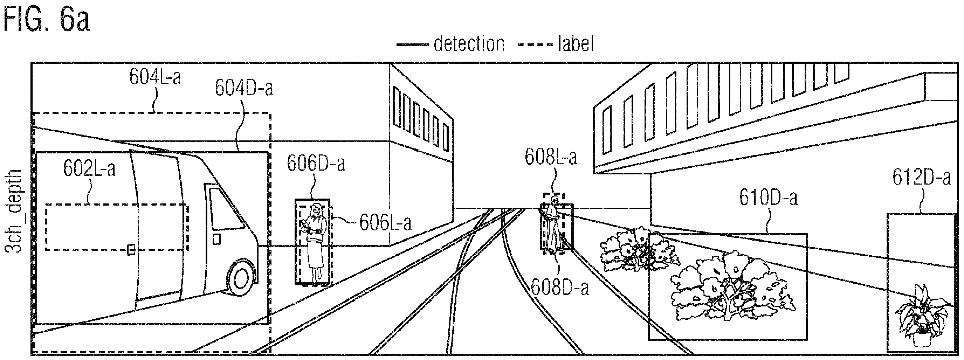

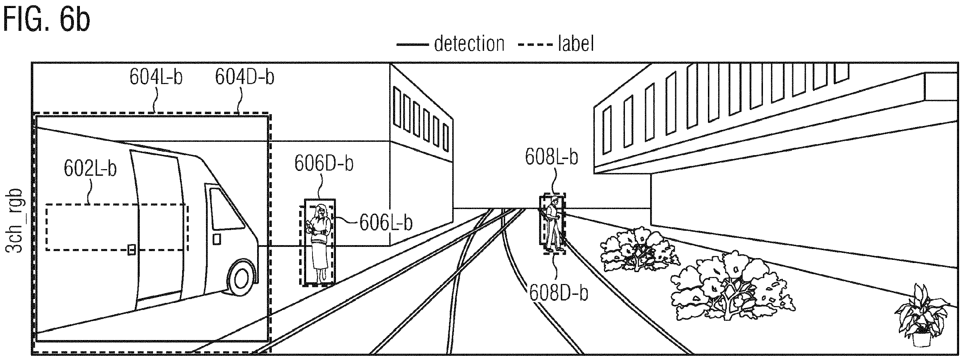

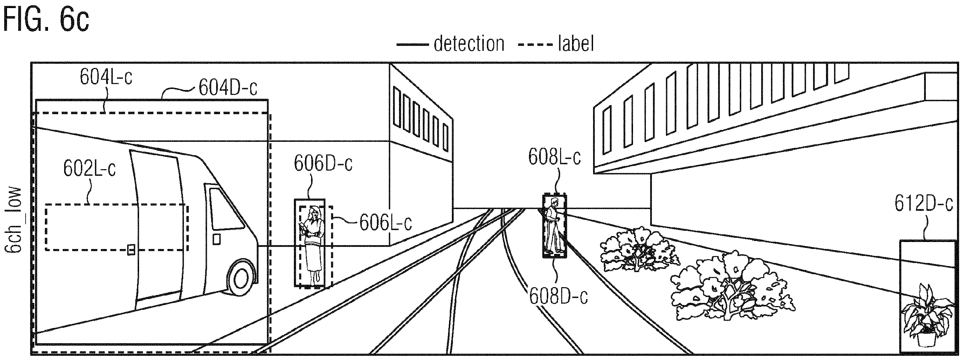

Figs. 6a to 6c show schematic drawings of an evaluation of detected (reference numbers comprising a "D", solid lines of bounding boxes) and labeled (reference numbers comprising an "L", dashed lines of bounding boxes) objects within a street scene. Fig. 6a shows objects detected (602-612D-a) and labeled (602-608L-a) based on an artificial neural network having a three-channel input for depth data, Fig. 6b shows objects detected (602-608D-b) and labeled (602-608L-a) based on an artificial neural network having a three-channel input for depth data, and Fig 6c shows objects detected (602-610D-c) and labeled (602-608L-a) based on an artificial neural network having a three-channel input for depth data.

In exemplary evaluations of the three artificial neural networks (three channel depth values, three channel RGB values and six channel RGB + depth values using early fusion), a mean average precision of recognizing pedestrians was 0.006 (three channel depth), 0.081 (three channel RGB) and 0.041 (six channel RGB + depth early fusion) in a first test, and 0.102 (three channel depth), 0.076 (three channel RGB) and 0.076 (six channel RGB + depth using early fusion) in a second evaluation.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. Method for a vehicle (100), the method comprising:
obtaining (110) camera sensor data of a camera of the vehicle (100);
obtaining (120) lidar sensor data of a lidar sensor of the vehicle (100);
determining (160) a combined image of the camera sensor data and the lidar sensor data; and
processing (170) the combined image using an artificial neural network.

2. The method according to claim 1, wherein the artificial neural network is configured to detect and/or classify at least one object within the combined image, and/or wherein the artificial neural network is configured to segment the combined image.

3. The method according to one of the previous claims, wherein the artificial neural network is a convolutional neural network.

4. The method according to one of the previous claims wherein the artificial neural network comprises a plurality of inputs, wherein at least one of the plurality of inputs is based on color information of the combined image and wherein at least one of the plurality of inputs is based on distance information of the combined image.

5. The method according to one of the previous claims further comprising upsampling a resolution of depth information within the combined image to match a spatial resolution of color information within the combined image.

6. The method according to one of the previous claims further comprising transforming depth or distance information of the combined image into a three-channel image format, wherein the processing (170) of the combined image is based on the three-channel image format.

7. The method according to claim 5, wherein the three-channel image format is based on one or more elements of the group of horizontal disparity, height above ground and angle with gravity or wherein the three-channel image format is based on a three-channel color map providing a linear conversion between depth or distance values and color values.

8. The method according to one of the previous claims, wherein the determining (160) of the combined image comprises overlaying depth information of the lidar sensor data onto an image constructed from the camera sensor data.

9. The method according to one of the previous claims, wherein the determining (160) of the combined image comprises assigning at least one of a distance value, a depth value and an intensity value to pixels of the combined image.

10. The method according to one of the previous claims further comprising determining (130) information related to one or more edges within the camera sensor data and information related to one or more intensity discontinuities within the lidar sensor data, wherein the determining (160) of the combined image is based on the information related the one or more edges and based on the information related to the one or more intensity discontinuities.

11. The method according to claim 10 further comprising determining a calibration of the camera sensor data and of the lidar sensor data based on the information related to the one or more edges and based on the information related to the one or more intensity discontinuities, wherein the determining (160) of the combined image is based on the calibration of the camera sensor data and of the lidar sensor data.

12. The method according to one of the previous claims further comprising determining (150) information related to a motion of the vehicle (100), wherein the determining (160) of the combined image is further based on the information related to the motion of the vehicle.

13. A computer program having a program code for performing the method according to one of the previous claims, when the computer program is executed on a computer, a processor, or a programmable hardware component.

14. An apparatus (10) for a vehicle (100), the apparatus (10) comprising:
at least one interface (12) configured to communicate with a camera of the vehicle (100) and to communicate with a lidar sensor of the vehicle (100); and
a processing module (14) configured to:
obtain camera sensor data of the camera,
obtain lidar sensor data of the lidar sensor,
determine a combined image of the camera sensor data and the lidar sensor data, and
process the combined image using an artificial neural network.

15. A vehicle (100) comprising an apparatus (10) according to claim 14.
